# EUROPEAN PATENT SPECIFICATION

(11) **EP 0 568 678 B1**
(45) Date of publication and mention of the grant of the patent: **10.06.1998**
(21) Application number: 92924081.0
(22) Date of filing: 13.11.1992
(51) Int. Cl.: G06F 13/28

(54) **DEVICE FOR TRANSMISSION OF DATA**
Datenübertragungsvorrichtung
CONFIGURATION CONCERNANT LE TRANSFERT DE DONNEES

(30) Priority: 21.11.1991 SE 9103450
(43) Date of publication of application: 10.11.1993
(73) Proprietor: ICL Systems Aktiebolag, S-164 93 Kista (SE)
(72) Inventor: SJÖQUIST, Tom, S-582 35 Linköping (SE)
(74) Representative: Dupuy, Susan Mary
(86) International application number: SE9200783
(87) International publication number: WO9310499

(56) References cited:
- EP-A- 0 382 342
- EP-A- 0 398 178
- GB-A- 2 201 269
- GB-A- 2 221 777

## Description

The present invention relates to an arrangement for the transfer of data between data-transmitting and data-receiving units connected to a common data bus, in conjunction with which the arrangement comprises a directly addressable memory and a unit for direct memory access (DMA) so arranged as to control the transfer of data between the aforementioned data-transmitting and data-receiving units.

The control card which executes data transfers at high speed between a connected in-out (I/O) unit and a system bus often contains a small data buffer for the intermediate storage of data prior to transfer. The reason for this is to avoid the slow I/O unit taking up a large part of the available band width on the system bus.

The disadvantage of this procedure is a certain delay, since data must be stored first in the data buffer in order to be transferred subsequently to the system bus.

A common solution involves connecting a buffer memory, a First-In-First-Out (FIFO) memory, between the I/O unit and the system bus, by so doing eliminating delays in the transfer of data without occupying more of the band width than is necessary.

In the case of a control card with local intelligence, however, it is frequently desirable to save a local copy of the transferred data. This copy of the transferred data is used mainly as a cache, where frequently used and/or the most recently used data are directly accessible in the control card's own memory.

It is thus desirable to store transferred data in a local cache for the control card, at the same time as data are transferred between the I/O unit and a system memory.

The object of the invention is to make available an arrangement by means of which the data in transfers between an I/O unit connected to a control card and a system bus, to which the aforementioned control card is connected, are stored in a local memory for the control card (a so-called cache) at the same time as the aforementioned data transfer takes place. This is achieved in that a control unit is connected to the aforementioned data-transmitting, data-receiving and DMA units and is so arranged, in conjunction with the transfer of data from a data-transmitting unit to a data-receiving unit, as to cause the data transfer also to include the simultaneous transfer of data to the directly addressable memory.

The invention represents a further development of existing technology in the area of DMA (see US Patent 3,812,465, Christiansen) and ordinary integrated control units for multi-channel DMA. These control units for DMA are designed to control the transfer of data between an I/O unit and a locally connected memory. The aforementioned arrangement modifies and complements the function of the control unit for DMA in such a way that the object of the invention is satisfied.

The simultaneous transfer of data between an I/O unit and a system bus and the updating of a local memory for the control card are achieved by utilizing a separate DMA channel, the DREQ signal of which is activated when both the DREQ signal from the control unit for the connected I/O unit and the DREQ signal from the control unit for the system bus are activated simultaneously. When the control unit for the DMA indicates that a data transfer can start by activating the DACK signal belonging to the channel via which data transfer takes place, both the DACK signal for the control unit of the I/O unit and the DACK signal for the system bus control unit are activated, and data are transferred between the I/O unit and the system bus. Simultaneous updating of the local memory of the control card is achieved through the normal write-to-memory cycle in the control unit for DMA.

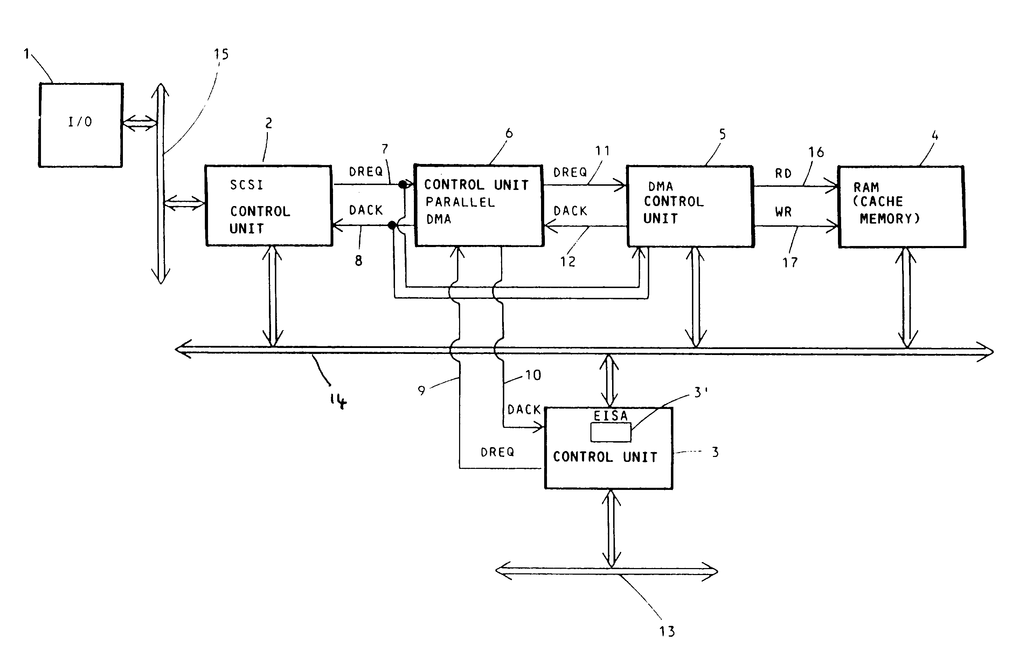

The invention is described in greater detail below with reference to the accompanying drawing, which illustrates in the form of a block diagram the environment in which the arrangement in accordance with the invention operates.

The designation 1 is used in the drawing for an I/O unit, and 2 for an associated control unit. The I/O unit 1 is a secondary memory unit in the example shown here, although all I/O units which transfer data are possible. The control unit 2 is so arranged as to handle the transfer of data between the special interface of the I/O unit 1 and a general interface intended for connection to a bus 14, where direct memory access (DMA) is used for data transfer. The expression interface is used here to denote both the circuit solutions and the rules (protocols) required for data transfer. The I/O unit 1 is connected in the example illustrated in the drawing to the control unit 2 with the previously disclosed SCSI interface, although the use of other interfaces is possible.

The designation 3 is used for a control unit for a system bus 13, and 4 for a directly addressable memory. The control unit 3 is so arranged as to handle the transfer of data between the system bus 13 and the local bus 14, where DMA can be used for the transfer of data. The control unit 3 includes a First-In-First-Out (FIFO) memory 3' for the equalization of the transfer rates between the system bus 13 and the local bus 14. In the example shown in the drawing, the interface used for the system bus 13 is of the EISA (Extended Industry System Architecture) type, although control units for buses with other interfaces can be used. The memory 4 is connected via the bus 14 and is used here as a cache, although other applications are also possible.

A control unit for multi-channel DMA is designated in the drawing as 5, and 6 is used to designate a control unit so arranged as to permit the transfer of data between the control unit 2 and the control unit 3. The embodiment illustrated in the drawing makes use of three channels, each of which has a DREQₙ signal, namely on lines 7, 9 and 11 for DREQ₀, DREQ₁ and DREQ₂, in order to indicate that the control unit connected to the signal is ready to transfer data, as well as a DACKₙ signal, namely on lines 8, 10 and 12 for DACK₀, DACK₁ and DACK₂, which is activated by the DMA control unit 5 when transfer can take place. The control unit 5 uses write and read signals, WR and RD, intended for the local memory 4.

The transfer of data between the control unit 2 of the I/O unit 1 and the control unit 3 of the system bus 13 is achieved by activating the DREQ₂ signal 11 connected to the DMA control unit 5 only when the DREQ₀ and DREQ₁ signals are active at the same time. The two DACK signals, DACK₀ and DACK₂, are activated in the same way when the DMA control unit 5 activates the DACK₂ signal.

The possibility of transferring data between two DMA units, each of which is capable of transferring data only to and from a single memory, is thus achieved by using the DMA control unit 5 for bus arbitration and causing the control unit 6 to synchronize the DREQ signals from the two control units 2 and 3 in such a way that the transfer of data only takes place when both units are ready. A dedicated DMA channel is used for this purpose. The control unit 6 will terminate the transfer of data in those cases in which a local memory is not involved.

The invention also includes other applications with a DMA control unit and DMA slaves used in conjunction with a control unit for a system bus. These then have the effect of changing the control in such a way that transfer takes place directly or indirectly between the slaves. The DMA control unit and the slaves involved are thus "tricked" into believing that normal DMA transfer is taking place.

A person skilled in the art will appreciate that the control unit 6 may be constructed in many different ways within the scope of the invention in order to operate in the manner described.

## Claims

1. Arrangement for the transfer of data between data-transmitting and data-receiving units (1) connected to a common data bus (15), in conjunction with which the arrangement comprises a directly addressable memory (4) and a unit for direct memory access (5) so arranged as to control the transfer of data between the aforementioned data-transmitting and data-receiving units (1), ***characterized in that*** a control unit (6) is connected to the aforementioned data-transmitting, data-receiving (1) and direct memory access, or DMA (15) units and is so arranged, in conjunction with the transfer of data from a data-transmitting unit to a data-receiving unit, as to cause the data transfer also to include the simultaneous transfer of data to the directly addressable memory (4).

2. Arrangement in accordance with Patent Claim 1, ***characterized in that*** the control unit (6) is so arranged as to synchronize the Data Request or DREQ and Data Acknowledge or DACK signals from the slaves allocated to the data units and to the directly addressable memory (4) in such a way that the transfer of data occurs only when the data-receiving unit and the directly addressable memory (4) are both ready for this to take place.

3. Arrangement in accordance with Patent Claim 2, ***characterized in that*** the control unit (6) is connected on the one hand with the DREQ and DACK connections of the data-transmitting units, and on the other hand with the DMA unit via an additional arrangement of conventionally available DREQ-DACK connections to the DMA control unit (5) and is so arranged as to activate the DREQ signal on the additional connection of the DMA control unit (5) when the DREQ signals of the data-transferring units are both active, and as to activate the DACK signals of the data-transferring units when the DMA control unit has activated the additional connection.

## Patentansprüche

1. Anordnung für die Übertragung von Daten zwischen Daten übertragenden und Daten aufnehmenden Einheiten (1), die mit einer gemeinsamen Datensammelleitung (15) verbunden sind, in Verbindung mit welchen die Anordnung einen direkt adressierbaren Speicher (4) und eine Einheit für einen direkten Speicherzugriff (5) aufweist, der so ausgelegt ist, daß die Übertragung von Daten zwischen den vorgenannten Daten übertragenden und Daten aufnehmenden Einheiten gesteuert wird, **dadurch gekennzeichnet**, daß eine Steuereinheit (6) mit den vorgenannten Daten übertragenden, Daten aufnehmenden Einheiten (1) und den Direktspeicherzugriffs- oder DMA-Einheiten (5) in Verbindung mit der Übertragung von Daten aus einer Daten übertragenden Einheit in eine Daten aufnehmende Einheit so ausgelegt ist, daß die Datenübertragung auch die gleichzeitige Übertragung von Daten in den direkt adressierbaren Speicher (4) mit einschließt.

2. Anordnung nach Anspruch 1, dadurch gekennzeichnet, daß die Steuereinheit (6) so ausgelegt ist, daß die Datenanfrage- oder DREQ-Signale und die Datenrückmeldeoder DACK-Signale aus den Hilfsspeichern synchronisiert werden, die den Dateneinheiten und dem direkt adressierbaren Speicher (4) in solcher Weise zugeordnet werden, daß die Übertragung von Daten nur auftritt, wenn die Daten aufnehmende Einheit und der direkt adressierbare Speicher (4) beide für diesen Vorgang bereit sind.

3. Anordnung nach Anspruch 2, dadurch gekennzeichnet, daß die Steuereinheit (6) einerseits mit den DREQ- und DACK-Verbindungen der Daten übertragenden Einheiten, und andererseits mit der DMA -Einheit über eine zusätzliche Anordnung von konventionell verfügbaren DREQ - DACK-Verbindungen mit der DMA-Steuereinheit (5) verbunden und so ausgelegt ist, daß das DREQ-Signal auf der zusätzlichen Verbindung der DMA-Steuereinheit (5) aktiviert wird, wenn die DREQ-Signale der Daten übertragenden Einheiten beide aktiv sind, und damit die DACK-Signale der Daten übertragenden Einheiten aktiviert werden, wenn die DMA-Steuereinheit die zusätzliche Verbindung aktiviert hat.

## Revendications

1. Agencement pour le transfert de données entre des unités d'émission de données et de réception de données (1) connectées à un bus de données commun (15), en conjonction avec lesquelles l'agencement comprend une mémoire directement adressable (4) et une unité pour un accès mémoire direct (5) agencées de manière à commander le transfert de données entre les unités d'émission de données et de réception de données (1) mentionnées ci-avant, caractérisé en ce qu'une unité de commande (6) est connectée aux unités d'émission de données et de réception de données (1) ainsi qu'à l'unité d'accès direct mémoire ou DMA (5) mentionnées ci-avant et est agencée de telle sorte que, en conjonction avec le transfert de données depuis une unité d'émission de données jusqu'à une unité de réception de données, elle ait pour effet que le transfert de données inclue également le transfert simultané de données jusqu'à la mémoire directement adressable (4).

2. Agencement selon la revendication 1, caractérisé en ce que l'unité de commande (6) est agencée de manière à synchroniser le signal de requête de données ou DREQ et le signal d'accusé de réception de données ou DACK provenant des esclaves alloués aux unités de données et à la mémoire directement adressable (4) de telle sorte que le transfert de données se produise seulement lorsque l'unité de réception de données et la mémoire directement adressable (4) sont toutes deux prêtes pour que celui-ci s'effectue.

3. Agencement selon la revendication 2, caractérisé en ce que l'unité de commande (6) est connectée d'une part aux connexions DREQ et DACK des unités d'émission de données et d'autre part à l'unité de DMA via un agencement supplémentaire constitué par des connexions DREQ-DACK disponibles classiquement sur l'unité de commande de DMA (5) et est agencée de manière à activer le signal DREQ sur la connexion supplémentaire de l'unité de commande de DMA (5) lorsque les signaux DREQ des unités de transfert de données sont tous actifs et de manière à activer les signaux DACK des unités de transfert de données lorsque l'unité de commande de DMA a activé la connexion supplémentaire.
